# EUROPEAN PATENT APPLICATION

(11) **EP 4 195 826 A1**
(43) Date of publication of application: **14.06.2023**
(21) Application number: 21853352.9
(22) Date of filing: 05.08.2021
(51) Int. Cl.: H04W 72/04

(54) **CHANNEL STATE INFORMATION FEEDBACK METHOD, TERMINAL, BASE STATION, AND STORAGE MEDIUM**

(30) Priority: 07.08.2020 CN 202010791632
(71) Applicant: ZTE Corporation, Shenzhen, Guangdong 518057 (CN)
(72) Inventor: ZHANG, Chenchen, Shenzhen, Guangdong 518057 (CN); HAO, Peng, Shenzhen, Guangdong 518057 (CN); GOU, Wei, Shenzhen, Guangdong 518057 (CN); HAN, Xianghui, Shenzhen, Guangdong 518057 (CN)
(74) Representative: Tiburzi, Andrea
(86) International application number: PCT/CN2021/110995
(87) International publication number: WO 2022/028550

(57) **Abstract**

Provided are a channel station information (CSI) feedback method, a terminal, a base station and a storage medium. The method includes the following. A resource for sending a CSI feedback is determined; the CSI feedback is prepared; and the CSI feedback is sent on the resource. According to the technical solution of the present application, the terminal may determine the resource for sending the CSI feedback according to the indication of the base station, and send the corresponding CSI feedback on the resource to the base station, so as to ensure that the base station receives the CSI feedback in time.

## Description

### TECHNICAL FIELD

The present application relates to the communication field and, in particular, to a channel state information (CSI) feedback method, a terminal, a base station and a storage medium.

### BACKGROUND

Considering the requirements of low delay and high reliability of the Ultra-Reliable Low Latency Communications (URLLC) service, the terminal needs to feed back more accurate and timely channel state information (CSI) to the base station, so that the base station can perform more reasonable link adaptation and the requirements of the URLLC service can be satisfied. The base station triggers an aperiodic channel state information feedback while scheduling downlink data transmission, and the terminal may feed back the triggered aperiodic channel state information feedback in an uplink control channel, so that it can be ensured that the base station receives the feedback from the terminal as soon as possible. Based on this method, how the base station indicates a resource for feeding back the aperiodic channel state information to the terminal is a problem to be solved.

### SUMMARY

Embodiments provide a channel state information (CSI) feedback method, a terminal, a base station and a storage medium, so that the terminal can send a CSI feedback on a resource for sending the channel state information feedback and determined according to an indication of the base station, and the base station can receive the CSI feedback in time.

The embodiments of the present application provide a channel state information (CSI) feedback method. The method includes the following.

A resource for sending a channel state information (CSI) feedback is determined.

The CSI feedback is prepared.

The CSI feedback is sent on the resource.

The embodiments of the present application further provide a channel state information (CSI) feedback method. The method includes the following.

Channel state information (CSI) feedback is triggered.

Resource relevant configuration for sending the CSI feedback is indicated.

The corresponding CSI feedback is received.

The embodiments of the present application further provide a terminal, and the terminal includes a memory, a processor, a program stored on the memory and executable on the processor and a data bus for enabling connection communication between the processor and the memory, where the program, when executed by the processor, implements the channel state information (CSI) feedback method provided in the embodiments.

The embodiments of the present application further provide a base station, and the base station includes a memory, a processor, a program stored on the memory and executable on the processor and a data bus for enabling connection communication between the processor and the memory, where the program, when executed by the processor, implements the channel state information (CSI) feedback method provided in the embodiments.

The embodiments of the present application further provide a storage medium configured for computer-readable storage. The storage medium stores one or more programs executable by one or more processors to implement the channel state information (CSI) feedback method provided in the embodiments.

According to the channel state information (CSI) feedback method, the terminal, the base station and the storage medium provided in the embodiments of the present application, the terminal sends the CSI feedback through the resource for sending the CSI feedback and indicated by the base station, so that the CSI feedback can be sent on the corresponding resource to the base station, and thus it is ensured that the base station receives the CSI feedback of the terminal in time.

### BRIEF DESCRIPTION OF DRAWINGS

FIG. 1 is a flowchart of a channel state information feedback method based on a terminal according to an embodiment of the present application; and
FIG. 2 is a flowchart of a channel state information feedback method based on a base station according to an embodiment of the present application.

### DETAILED DESCRIPTION

Embodiments of the present application will be described hereinafter in detail with reference to the drawings.

It is to be understood that the specific embodiments described herein are intended to explain the present application and not to limit the present application.

Suffixes such as "module", "component" or "unit" used for indicating elements in the subsequent description are used merely for facilitating the description of the present application, and have no particular meaning in themselves. Therefore, "module", "component" or "unit" may be used in a mixed manner.

In current NR R15, an aperiodic channel state information (A-CSI) feedback may only be triggered by a physical downlink control channel (PDCCH) carrying uplink (UL) Grant and is fed back in a physical uplink shared channel (PUSCH) scheduled by the UL Grant. In this manner, if no UL shared channel (SCH) needs to be sent, the base station has to send the PDCCH carrying the UL Grant for triggering the aperiodic channel state feedback, which may lead to PDCCH blocking. Therefore, the aperiodic channel state information feedback may be triggered by a PDCCH carrying downlink (DL) Grant, and the DL Grant may simultaneously schedule a physical downlink shared channel (PDSCH). Thus, the triggering of the aperiodic channel state information feedback is enhanced. In a case where the base station needs to schedule a PUSCH and the terminal needs to feed back channel state information, the aperiodic channel state information feedback may be triggered by UL Grant; in a case where the base station needs to schedule a PDSCH and the terminal needs to feedback channel state information, the aperiodic channel state information feedback may be triggered by DL Grant. Moreover, the aperiodic channel state information feedback may also be triggered after the terminal decodes a PDSCH transport block (TB) as negative acknowledgment (NACK), so that the aperiodic channel state information fed back can be applied to the retransmission link adaptation of the PDSCH TB as soon as possible.

After decoding the PDSCH, the terminal generates a hybrid automatic repeat request acknowledgment (HARQ-ACK) feedback for the PDSCH according to the decoding result being acknowledgment (ACK) or NACK, and needs to carry the HARQ-ACK feedback on a physical uplink control channel (PUCCH) for feedback to the base station. To carry HARQ-ACK feedbacks for multiple PDSCHs on one PUCCH, a semi-persistent HARQ-ACK codebook manner and a dynamic HARQ-ACK codebook manner are introduced into NR. For the dynamic HARQ-ACK codebook manner, the base station finally carries the HARQ-ACK feedbacks for the multiple PDSCHs on a certain PUCCH resource of a certain slot indicated by K1 and PRI in the last downlink control information (DCI) for sending according to the K1 indication of the multiple PDSCHs, where K1 indicates an offset between a slot where the DCI is located and a slot where the PUCCH is located, and PRI indicates an index of a PUCCH resource.

In R16, a priority indicator field is introduced in the DCI for scheduling the PDSCH or the DCI for scheduling the PUSCH and is used for indicating priority information. As this field is introduced, the HARQ-ACK feedback of the decoding result of the corresponding scheduled PDSCH is divided to a high priority HARQ-ACK feedback or a low priority HARQ-ACK feedback.

If the terminal needs to send multiple uplink transmission channels, time domain resources of the multiple uplink transmission channels may completely or partially overlap. Once the overlap occurs, the terminal needs to multiplex multiple uplink transmissions on one uplink transmission channel for sending in a case where certain conditions are satisfied, or the terminal needs to drop part of uplink transmissions and only send remained uplink transmissions in a case where other conditions are satisfied.

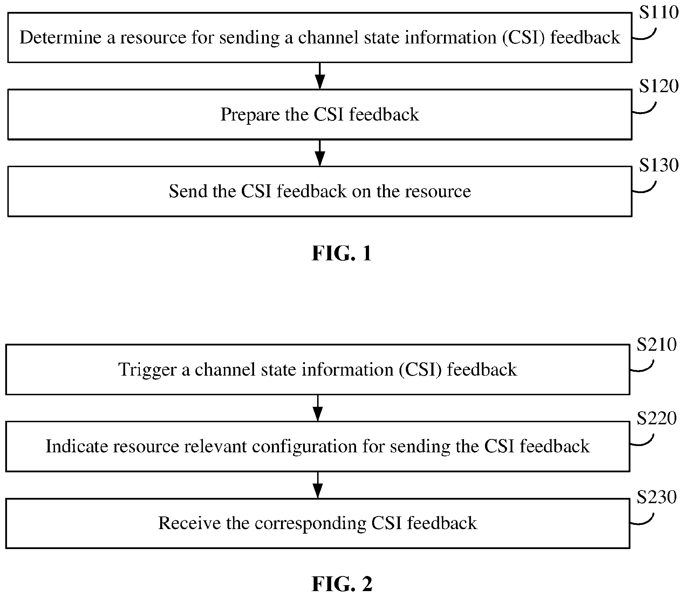

As shown in FIG. 1, an embodiment provides a channel state information feedback method. The method is based on a terminal and includes the following.

In S 110, a resource for sending a channel state information (CSI) feedback is determined.

In S 120, the CSI feedback is prepared.

In S 130, the CSI feedback is sent on the resource.

The CSI feedback that the terminal needs to send to a base station may include a CSI feedback triggered by the base station and/or a predefined CSI feedback, and the terminal needs to determine resources for sending these CSI feedbacks. For the CSI feedback, the resource for sending the CSI feedback is generally determined according to relevant indication information provided by the base station. The terminal prepares the CSI feedback needing to be sent, a CSI report needing to be fed back is carried, and then the terminal sends the CSI feedback on the determined resource. It is to be understood that the flowchart of the channel state information feedback method shown in FIG. 1 does not limit the execution order of determining the resource for sending the CSI feedback and preparing the CSI feedback.

In an implementation, determining the resource for sending the CSI feedback includes the following.

The resource for sending the CSI feedback is determined according to at least one of: a priority of the CSI feedback, a time domain resource indication in association downlink control information (DCI), a physical uplink control channel (PUCCH) resource indication in association DCI, a preset time domain offset, a preset frequency domain offset, a preset PUCCH resource indication offset, a priority of association uplink control information (UCI) or a sending situation of an association hybrid automatic repeat request acknowledgment (HARQ-ACK) feedback.

The CSI feedback carried on a PUCCH for sending may include at least one of an aperiodic CSI (A-CSI) feedback, a periodic CSI (P-CSI) feedback or a semi-persistent CSI (SP-CSI) feedback. At least one piece of the preceding information may be used for indicating the PUCCH resource of the CSI feedback.

In an implementation, determining the resource for sending the CSI feedback according to the priority of the CSI feedback includes the following.

The priority of the CSI feedback is determined according to a priority indicator field indication included in the received association DCI or a priority of the association HARQ-ACK feedback.

In an implementation, the association DCI includes at least one of:
DCI for triggering the CSI feedback;
DCI for scheduling a transmission channel triggering the CSI feedback, where the transmission channel includes a PDSCH or a PUSCH; or
the last DCI for scheduling a transmission channel corresponding to the association HARQ-ACK feedback.

In an implementation, the association HARQ-ACK feedback includes at least one of:
an HARQ-ACK feedback of a transmission channel scheduled by the association DCI;
an HARQ-ACK codebook including an HARQ-ACK feedback of a transmission channel scheduled by the association DCI;
an HARQ-ACK feedback having the same priority as the CSI feedback; or
an HARQ-ACK codebook including an HARQ-ACK feedback having the same priority as the CSI feedback.

In an implementation, determining the priority of the CSI feedback according to a priority indicator field included in the received association DCI includes the following.

In a case where the priority indicator field indication in the association DCI is a high priority, the priority of the CSI feedback is a high priority; in a case where the priority indicator field indication in the association DCI is a low priority, the priority of the CSI feedback is a low priority.

If the association DCI for scheduling the PDSCH transmission or the PUSCH transmission includes a priority indicator field, and the DCI also triggers an A-CSI feedback, the A-CSI feedback may be triggered at least through a CSI Request field of the DCI; if the triggered A-CSI feedback is transmitted on a PUCCH, a priority of the A-CSI feedback may be indicated by the priority indicator field in the DCI. If the priority indicator field indication in the association DCI is a high priority, the priority of the A-CSI feedback is a high priority; if the priority indicator field indication in the association DCI is a low priority, the priority of the A-CSI feedback is a low priority.

In an implementation, determining the priority of the CSI feedback according to the priority of the association HARQ-ACK feedback includes the following.

In a case where the priority of the association HARQ-ACK feedback is a high priority, the priority of the CSI feedback is a high priority; in a case where the priority of the association HARQ-ACK feedback is a low priority, the priority of the CSI feedback is a low priority.

In an implementation, sending the CSI feedback on the resource includes the following.

In a case where multiple CSI feedbacks need to be sent to the base station, CSI feedbacks having the same priority are multiplexed on the same PUCCH for sending.

In an implementation, the CSI feedback includes at least one of an A-CSI feedback, a P-CSI feedback or an SP-CSI feedback. If the terminal needs to send multiple CSI feedbacks to the base station, and the CSI feedback may include at least one of an A-CSI feedback, a P-CSI feedback or an SP-CSI feedback, only CSI feedbacks having the same priority can be multiplexed on the same PUCCH for sending.

In an implementation, sending the CSI feedback on the resource includes the following.

In a case where a priority of a CSI feedback needing to be sent to the base station is the same as the priority of the association UCI, the CSI feedback and the UCI who have the same priority are multiplexed on the same PUCCH for sending.

The association UCI may include at least one of an A-CSI feedback, a P-CSI feedback, an SP-CSI feedback, an association HARP-ACK feedback, a scheduling request (SR) or a channel sounding reference signal (SRS). If the terminal needs to send multiple pieces of UCI to the base station, and the UCI includes at least one of the preceding A-CSI feedback, P-CSI feedback, SP-CSI feedback, association HARQ-ACK feedback, SR or SRS, only multiple types of UCI having the same priority can be multiplexed on the same PUCCH for sending.

If the base station sends multiple DCIs to the terminal for scheduling multiple PDSCHs, and at least one DCI of these DCIs triggers an A-CSI feedback, the terminal may form association HARQ-ACK feedbacks corresponding to the PDSCHs into a dynamic HARQ-ACK codebook, and if the association HARQ-ACK feedbacks included in the dynamic HARQ-ACK codebook are all high-priority HARQ-ACK feedbacks, only high-priority A-CSI feedbacks can be multiplexed with the dynamic HARQ-ACK codebook on the same PUCCH for sending; if the association HARQ-ACK feedbacks included in the dynamic HARQ-ACK codebook are all low-priority HARQ-ACK feedbacks, only low-priority A-CSI feedbacks can be multiplexed with the dynamic HARQ-ACK codebook on the same PUCCH for sending.

In an implementation, determining the resource for sending the CSI feedback according to the time domain resource indication in the association DCI includes the following.

A time domain resource for sending the CSI feedback is determined according to the time domain resource indication in the association DCI.

In an implementation, the time domain resource indication in the association DCI is used for indicating an offset between a time domain resource unit where the association DCI is located and a time domain resource unit where the CSI feedback is located. Specifically, the time domain resource unit where the association DCI is located is earlier than the time domain resource unit where the CSI feedback is located.

The time domain resource unit includes at least one of: a frame, a subframe, a slot, a subslot or an orthogonal frequency-division multiplexing (OFDM) symbol.

A PDSCH-to-HARQ_feedback timing indicator field in the original association DCI is used for indicating an offset between a slot/subslot for sending the association HARQ-ACK feedback of the PDSCH scheduled by the association DCI and a slot/subslot for sending the association DCI. If the association DCI participates in triggering the CSI feedback, or the decoding result of the PDSCH scheduled by the association DCI participates in triggering the CSI feedback, the PDSCH-to-HARQ_feedback timing indicator field in the association DCI may also be used for indicating an offset between a slot/subslot for sending the CSI feedback and the slot/subslot for sending the association DCI. Therefore, the terminal can determines the slot/subslot for sending the CSI feedback according to an indication of the PDSCH-to-HARQ_feedback timing indicator field.

If the PDSCH-to-HARQ_feedback timing indicator field in the association DCI indicates both the offset between the slot/subslot of the association HARQ-ACK feedback and the slot/subslot for sending the association DCI and the offset between the slot/subslot of the CSI feedback and the slot/subslot for sending the association DCI, the association HARQ-ACK feedback and the CSI feedback are sent within the same slot/subslot. However, whether to use the same time-frequency resource on the same slot/subslot further depends on whether a PUCCH resource and a PUCCH resource set between the association HARQ-ACK feedback and the CSI feedback are the same.

In an implementation, determining the resource for sending the CSI feedback according to the PUCCH resource indication in the association DCI includes the following.

An index of a PUCCH resource carrying the CSI feedback is determined according to the PUCCH resource indication in the association DCI.

In an implementation, the method further includes the following.

In a case where the association DCI is the last DCI of an HARQ-ACK codebook where the association HARQ-ACK feedback is located, the PUCCH resource indication further indicates a PUCCH resource carrying the association HARQ-ACK feedback.

A PUCCH resource indicator field in the association DCI is used for indicating an index of a PUCCH resource used by the association HARQ-ACK feedback of the PDSCH scheduled by the association DCI and an index of a PUCCH resource carrying the CSI feedback.

If the association DCI is not the last DCI of the HARQ-ACK codebook in which the association HARQ-ACK feedback is located, the index of the PUCCH resource used for the association HARQ-ACK feedback is determined by a PUCCH resource indicator field in the last DCI. If the association DCI participates in triggering the CSI feedback, or the decoding result of the PDSCH scheduled by the association DCI participates in triggering the CSI feedback, the PUCCH resource indicator field in the association DCI is used for indicating the index of the PUCCH resource carrying the CSI feedback.

If the association DCI is the last DCI of the HARQ-ACK codebook where the association HARQ-ACK feedback is located, a PUCCH resource index of a PUCCH resource carrying the association CSI feedback is the same as a PUCCH resource index of a PUCCH resource carrying the association HARQ-ACK codebook.

If the association DCI is not the last DCI of the HARQ-ACK codebook where the corresponding association HARQ-ACK feedback is located, when the PUCCH resource indicator field indicated in the last DCI of the HARQ-ACK codebook where the corresponding association HARQ-ACK feedback is located is different from the PUCCH resource indicator field indicated in the association DCI, the PUCCH resource index of the PUCCH resource carrying the association CSI feedback is different from the PUCCH resource index of the PUCCH resource carrying the HARQ-ACK codebook, and then the terminal sends the association HARQ-ACK feedback and the CSI feedback on different PUCCH resources, respectively.

If the association DCI is not the last DCI of the HARQ-ACK codebook where the corresponding association HARQ-ACK feedback is located, when the PUCCH resource indicator field indicated in the last DCI of the HARQ-ACK codebook where the corresponding association HARQ-ACK feedback is located is the same as the PUCCH resource indicator field indicated in the association DCI, the PUCCH resource index of the PUCCH resource of the association CSI feedback is the same as the PUCCH resource index of the PUCCH resource carrying the HARQ-ACK codebook, the terminal is predefined by a system or semi-persistently configured by the base station, and at least one of methods described below may be used.

The terminal needs to multiplex the association HARQ-ACK feedback and the CSI feedback together, which PUCCH resource set is used is determined according to a multiplexed UCI payload, and for the selected PUCCH resource set, which specific PUCCH Resource in the selected PUCCH resource set is used is determined according to the PUCCH resource indicator field indicated in the association DCI, and therefore the association HARQ-ACK feedback and the CSI feedback are carried in the same PUCCH resource for sending.

The terminal does not multiplex the association HARQ-ACK feedback and the CSI feedback. Which PUCCH resource set is used by the association HARQ-ACK feedback and which PUCCH resource set is used by the CSI feedback are determined according to respective UCI payloads of the association HARQ-ACK feedback and the CSI feedback. For example, if PUCCH Resource Set a is selected for the association HARQ-ACK feedback and PUCCH Resource Set b is selected for the CSI feedback, where a and b are unequal integers, which PUCCH resource is specifically used for feeding back the association HARQ-ACK feedback is determined from PUCCH Resource Set a by using the PUCCH resource indicator field indicated in the association DCI, and which PUCCH resource is specifically used for feeding back the CSI feedback is determined from PUCCH Resource Set b by using the PUCCH resource indicator field indicated in the association DCI. It needs to be ensured that a and b are definitely different during the configuration by the base station.

The terminal determines which PUCCH resource set is used by the association HARQ-ACK feedback and which PUCCH resource set is used by the CSI feedback according to the respective UCI payloads of the association HARQ-ACK feedback and the CSI feedback. If the same PUCCH resource set is selected for the association HARQ-ACK feedback and the CSI feedback, the terminal considers that the association HARQ-ACK feedback and the CSI feedback need to be multiplexed, and then re-determines which PUCCH resource set to use according to the multiplexed UCI payload. For the selected PUCCH resource set, which specific PUCCH resource in the selected PUCCH resource set is used is determined according to the PUCCH resource indicator field indicated in the association DCI, and thus the association HARQ-ACK feedback and the CSI feedback are carried on the same PUCCH resource for sending. If different PUCCH resource sets, that is, PUCCH Resource Set a and PUCCH Resource Set b, respectively, are selected for the association HARQ-ACK feedback and the CSI feedback, where a and b are unequal integers, which PUCCH resource is specifically used for feeding back the association HARQ-ACK feedback is determined from PUCCH Resource Set a by using the PUCCH resource indicator field indicated in the association DCI, and which PUCCH resource is specifically used for feeding back the CSI feedback is determined from PUCCH Resource Set b by using the PUCCH resource indicator field indicated in the association DCI.

In an implementation, determining the resource for sending the CSI feedback according to the preset time domain offset includes the following.

A time domain resource for sending the CSI feedback is determined according to the preset time domain offset, where the preset time domain offset is predefined by the system, is configured by the base station through radio resource control (RRC) signaling, or is indicated in the association DCI.

In an implementation, the preset time domain offset is used for indicating an offset between a time domain resource unit for sending the CSI feedback and a time domain resource unit for sending the association HARQ-ACK feedback.

The preset time domain offset, that is, offset 1, is predetermined by the system, is semi-persistently configured by the base station to the terminal through the RRC signaling or is indicated in the association DCI, where offset 1 indicates a slot/subslot offset between a slot/subslot where an PUCCH resource carrying the association HARQ-ACK feedback is located and a slot/subslot where an PUCCH resource carrying the CSI feedback is located. Optionally, the slot/subslot where the PUCCH resource carrying the association HARQ-ACK feedback is located is relatively early, the slot/subslot where the PUCCH resource carrying the CSI feedback is located is relatively late, and an index of the slot/subslot where the PUCCH resource carrying the CSI feedback is located is equal to an index of the slot/subslot where the PUCCH resource carrying the association HARQ-ACK feedback is located plus offset 1. It is to be understood that it may be that the slot/subslot where the PUCCH resource carrying the association HARQ-ACK feedback is located is relatively late, and the slot/subslot where the PUCCH resource carrying the CSI feedback is located is relatively early.

The terminal may determine whether to determine the slot/subslot where the PUCCH resource carrying the CSI feedback is located based on offset 1 according to whether the association DCI is the last DCI of the HARQ-ACK codebook where the association HARQ-ACK feedback is located.

If the association DCI is the last DCI of the HARQ-ACK codebook where the association HARQ-ACK feedback is located, the terminal determines the slot/subslot where the PUCCH resource carrying the CSI feedback is located according to the slot/subslot where the PUCCH resource carrying the association HARQ-ACK feedback is located and offset 1.

If the association DCI is not the last DCI of the HARQ-ACK codebook where the association HARQ-ACK feedback is located, the terminal does not consider offset 1 or considers that offset 1 is equal to 0 when determining the slot/subslot where the PUCCH resource carrying the CSI feedback is located.

In an implementation, determining the resource for sending the CSI feedback according to the preset frequency domain offset includes the following.

A frequency domain resource for sending the CSI feedback is determined according to the preset frequency domain offset, where the preset frequency domain offset is predefined by the system, is configured by the base station through RRC signaling, or is indicated in the association DCI.

In an implementation, the preset frequency domain offset is used for indicating an offset between a starting frequency domain resource unit for sending the CSI feedback and a starting frequency domain resource unit for sending the association HARQ-ACK feedback, where the frequency domain resource unit is a physical resource block (PRB), a bandwidth part (BWP) or a resource block group (RBG).

The preset frequency domain offset, that is, offset 2, is predetermined by the system, is semi-persistently configured by the base station to the terminal through the RRC signaling or is indicated in the association DCI, where offset 2 indicates an offset between a starting frequency domain resource unit of the PUCCH resource carrying the association HARQ-ACK feedback and a starting frequency domain resource unit of the PUCCH resource carrying the CSI feedback. The offset may be an offset in an increasing direction of frequency domain resource units, and the starting frequency domain resource unit of the PUCCH resource carrying the CSI feedback is equal to the starting frequency domain resource unit of the PUCCH resource carrying the association HARQ-ACK feedback plus offset 2. It is to be understood that the offset may also be an offset in a decreasing direction of frequency domain resource units.

In an implementation, determining the resource for sending the CSI feedback according to the preset PUCCH resource indication offset includes the following.

A PUCCH resource carrying the CSI feedback is determined according to the preset PUCCH resource indication offset, where the preset PUCCH resource indication offset is predefined by the system, is configured by the base station through RRC signaling or is indicated in the association DCI.

In an implementation, the preset PUCCH resource indication preset is used for indicating an offset between an index of the PUCCH resource carrying the CSI feedback and an index of a PUCCH resource carrying the association HARQ-ACK feedback.

The preset PUCCH resource indication offset, that is, offset 3, is predetermined by the system, is semi-persistently configured by the base station to the terminal through the RRC signaling or is indicated in the association DCI, where offset 3 indicates an offset between a PUCCH resource indicator of the PUCCH resource carrying the association HARQ-ACK feedback and a PUCCH resource indicator of the PUCCH resource carrying the CSI feedback. The offset may be a non-negative integer, and the PUCCH resource indicator of the PUCCH resource carrying the CSI feedback is equal to the PUCCH resource indicator of the PUCCH resource carrying the association HARQ-ACK feedback plus offset 3.

In an implementation, preparing the CSI feedback includes the following.

A payload of the CSI feedback is determined according to a first configuration value, where the first configuration value is predefined by the system or is configured by the base station to the terminal through RRC signaling, and is used for indicating the number of CSI reports included in the CSI feedback or the number of bits included in the CSI feedback.

In an implementation, the method further includes the following.

In a case where a CSI feedback payload prepared according to a received CSI trigger is less than the payload determined according to the first configuration value, a specific position of the CSI feedback is supplemented with multiple padding bits.

In a case where a CSI feedback payload prepared according to a received CSI trigger is greater than the payload determined according to the first configuration value, at least one CSI report is dropped to enable the CSI feedback payload to be equal to the payload determined according to the first configuration value.

In an implementation, in the case where the CSI feedback payload prepared according to the received CSI trigger is greater than the payload determined according to the first configuration value, dropping at least one CSI report to enable the CSI feedback payload to be equal to the payload determined according to the first configuration value includes the following.

The at least one CSI report is dropped according to a time order in which CSI reports are triggered.

Alternatively, the at least one CSI report is dropped according to a priority order of CSI reports.

In an implementation, dropping the at least one CSI report according to the time order in which the CSI reports are triggered includes the following.

A CSI report triggered earlier is dropped.

In an implementation, dropping the at least one CSI report according to the priority order of the CSI reports includes the following.

A CSI report having a lower priority is dropped.

The first configuration value N may be semi-persistently configured, and the base station and the terminal may take that the terminal feeds back N A-CSI reports as default, so that the terminal and the base station reach a consensus on the used PUCCH resource set. If more than N A-CSI reports need to be fed back, the A-CSI report triggered earlier may be dropped.

The terminal may determine which PUCCH resource set to use according to a UCI payload, and may further determine which PUCCH resource to use from the selected PUCCH resource set according to an indication of a PUCCH resource indicator. Only the terminal and the base station have a same assumption for the UCI payload, the terminal and the base station can determine the same PUCCH resource set. In a case where the CSI feedback is carried on a PUCCH, both the terminal and the base station use at least one of methods described below to determine the UCI payload.

In method 1, the value N of the CSI payload is predefined by the system or is semi-persistently configured by the base station to the terminal.

In method 2, the number M of the CSI reports included in the CSI payload is predefined by the system or is semi-persistently configured by the base station to the terminal.

For method 1, if the PUCCH fed back by the terminal includes the CSI feedback, the CSI payload must occupy N bits. The N-bit CSI payload is composed of one CSI report or multiple CSI reports, and the multiple CSI reports may be ordered from high to low in priority or ordered from early to late in triggering time.

Specifically, if the CSI payload prepared by the terminal according to the received CSI trigger is less than N bits, the terminal needs to supplement an appropriate position with bit of 0. The appropriate position may be at least one of: a position where the terminal does not receive or lose the DCI; a position where the HARQ-ACK feedback of the PDSCH decoded by the terminal is NACK; or a position at the end of CSI payload.

If the CSI payload prepared by the terminal according to the received CSI trigger is greater than N bits, the terminal drops multiple CSI reports to ensure that the CSI payload occupies N bits. The dropping follows at least one of following principles: dropping according to the time order in which the CSI reports are triggered, that is, dropping the CSI report triggered earlier; or dropping according to the priority order of the CSI reports, that is, dropping the CSI report having a lower priority.

For all CSI reports included in the CSI payload, the payload of each CSI report has the same size, and is predefined by the system or is semi-persistently configured by the base station to the terminal.

For method 2, if the PUCCH fed back by the terminal includes the CSI feedback, the CSI payload must include M CSI reports. The M CSI reports may be ordered from high to low in priority or ordered from early to late in triggering time.

If the terminal prepares less than M CSI reports according to the received CSI trigger, the terminal needs to supplement an appropriate position with bits of 0. Specifically, the appropriate position may be at least one of: a position where the terminal does not receive or lose the DCI; a position where the HARQ-ACK feedback of the PDSCH decoded by the terminal is NACK; or a position at the end of CSI payload.

If the terminal prepares more than M CSI payloads according to the received CSI trigger, the terminal drops multiple CSI reports to ensure that the CSI payload includes M CSI reports. Specifically, the dropping follows at least one of following principles: dropping according to the time order in which the CSI reports are triggered, that is, dropping the CSI report triggered earlier; or dropping according to the priority order of the CSI reports, that is, dropping the CSI report having a lower priority.

For all CSI reports included in the CSI payload, the size of the payload of each CSI report is the same, and is predefined by the system or is semi-persistently configured by the base station to the terminal.

In an implementation, preparing the CSI feedback includes the following.

The CSI feedback is configured to include multiple CSI reports, where a payload of each CSI report is the same, the number of the multiple CSI reports is predefined by the system or is configured by the base station through RRC signaling, and the payload of the each CSI report is predefined by the system or is configured by the base station through RRC signaling.

In an implementation, the sending situation of the association HARQ-ACK feedback includes sending the association HARQ-ACK feedback and cancelling the sending of the association HARQ-ACK feedback.

In an implementation, the method further includes the following.

In response to cancelling the sending of the association HARQ-ACK feedback, the sending of the CSI feedback is correspondingly canceled.

In an implementation, in a case where a PUCCH resource carrying the CSI feedback at least partially overlaps a PUCCH resource carrying other UCI in a time domain, the CSI feedback and the other UCI are multiplexed on the same PUCCH resource. The other UCI may include anassociation HARQ-ACK feedback, an SP-CSI feedback, a P-CSI feedback, etc.

In an implementation, in the case where the PUCCH resource carrying the CSI feedback at least partially overlaps the PUCCH resource carrying the other UCI in the time domain, multiplexing the CSI feedback and the other UCI on the same PUCCH resource includes the following.

In a case where a multiplexed UCI payload exceeds a carrying capability of the PUCCH resource for multiplexing, part of UCI is dropped according to a priority rule.

In an implementation, in the case where the multiplexed UCI payload exceeds the carrying capability of the PUCCH resource for multiplexing, dropping the part of the UCI according to the priority rule includes the following.

The priority rule is that a priority of an HARQ-ACK feedback, a priority of an A-CSI feedback, a priority of an SP-CSI feedback and a priority of a P-CSI feedback progressively decrease.

UCI having a low priority is dropped.

When time domain resources of multiple uplink channels completely or partially overlap, in some cases, the terminal only sends part of the uplink channels, and drops other uplink channels; in some cases, the terminal needs to multiplex multiple UCIs satisfying a multiplexing requirement on one uplink channel for sending. The system predefines or the base station semi-persistently configures at least one of rules described below for the terminal, and thus the terminal operates according to the rules described below.

In rule 1, the association HARQ-ACK feedback and CSI feedback triggered by the same association DCI are referred to as feedbacks associated with each other, or when the decoding result of the PDSCH triggers a CSI feedback, the association HARQ-ACK feedback and CSI feedback corresponding to the same HARQ-ACK codebook are also referred to as feedbacks associated with each other. When the terminal drops the association HARQ-ACK feedback, the CSI feedback associated with the association HARQ-ACK feedback is also dropped. Specifically, the association HARQ-ACK feedback and the CSI feedback associated with the association HARQ-ACK feedback are originally carried in the same resource or different PUCCH resources.

In rule 2, PUCCH Resource 1 carries an A-CSI feedback and/or an association HARQ-ACK feedback, and PUCCH Resource 2 carries a periodic CSI feedback and/or a semi-persistent CSI feedback; when a time domain resource of PUCCH Resource 1 and a time domain resource of PUCCH Resource 2 completely or partially overlap, the A-CSI feedback and/or the association HARQ-ACK feedback and the periodic CSI feedback and/or the semi-persistent CSI feedback are all multiplexed on PUCCH Resource 1 for transmission. If the multiplexed UCI payload exceeds the carrying capability of PUCCH Resource 1, part of UCI is dropped in the following priority order: the association HARQ-ACK feedback > the A-CSI feedback > the semi-persistent CSI feedback > the periodic CSI feedback. Specifically, the order for concatenating multiplexed bits also needs to follow the priority order. That is, in the UCI payload, a high-priority feedback is placed first and then a low-priority feedback is placed, correspondingly, from high bits to low bits.

As shown in FIG. 2, an embodiment provides a channel state information feedback method. The method is based on a base station and includes the following.

In S210, a channel state information (CSI) feedback is triggered.

In S220, resource relevant configuration for sending the CSI feedback is indicated.

In S230, the corresponding CSI feedback is received.

For an A-CSI feedback, the base station needs to trigger a terminal performing the corresponding A-CSI feedback, and for a periodic CSI feedback, the terminal performs the feedback according to a pre-configured period. For the CSI feedback, the base station generally provides relevant indication information to indicate a resource for the terminal sending the CSI feedback. The terminal prepares the CSI feedback needing to be sent, a CSI report needing to be fed back is carried, and then the base station receives the corresponding CSI feedback through the indicated resource.

In an implementation, indicating the resource relevant configuration for sending the CSI feedback includes the following.

The resource for sending the CSI feedback is indicated through at least one of: a priority of the CSI feedback, a time domain resource indication in association downlink control information (DCI), a physical uplink control channel (PUCCH) resource indication in association DCI, a preset time domain offset, a preset frequency domain offset, a preset PUCCH resource indication offset, a priority of association uplink control information (UCI) or a sending situation of an association hybrid automatic repeat request acknowledgment (HARQ-ACK) feedback.

In an implementation, indicating the resource for sending the CSI feedback through the priority of the CSI feedback includes the following.

The priority of the CSI feedback is indicated through a priority indicator field indication included in the sent association DCI or a priority of the association HARQ-ACK feedback.

In an implementation, the association DCI includes at least one of:
DCI for triggering the CSI feedback;
DCI for scheduling a transmission channel triggering the CSI feedback, where the transmission channel includes a PDSCH or a PUSCH; or
the last DCI for scheduling a transmission channel corresponding to the association HARQ-ACK feedback.

In an implementation, the association HARQ-ACK feedback includes at least one of:
an HARQ-ACK feedback of a transmission channel scheduled by the association DCI;
an HARQ-ACK codebook including an HARQ-ACK feedback of a transmission channel scheduled by the association DCI;
an HARQ-ACK feedback having the same priority as the CSI feedback; or
an HARQ-ACK codebook including an HARQ-ACK feedback having the same priority as the CSI feedback.

In an implementation, indicating the priority of the CSI feedback through a priority indicator field included in the association DCI includes the following.

In a case where the priority indicator field indication in the association DCI is a high priority, it is indicated that the priority of the CSI feedback is a high priority; in a case where the priority indicator field indication in the association DCI is a low priority, it is indicated that the priority of the CSI feedback is a low priority.

In an implementation, indicating the priority of the CSI feedback through the priority of the association HARQ-ACK feedback includes the following.

In a case where it is indicated that the priority of the association HARQ-ACK feedback is a high priority, it is indicated that the priority of the CSI feedback is a high priority; in a case where it is indicated that the priority of the association HARQ-ACK feedback is a low priority, it is indicated that the priority of the CSI feedback is a low priority.

In an implementation, receiving the corresponding CSI feedback includes the following.

In a case where multiple CSI feedbacks need to be received, CSI feedbacks having the same priority which are multiplexed on the same PUCCH are received.

In an implementation, the CSI feedback includes at least one of an A-CSI feedback, a P-CSI feedback or an SP-CSI feedback.

In an implementation, receiving the corresponding CSI feedback includes the following.

In a case where a priority of a CSI feedback needing to be received is the same as the priority of the association UCI, the CSI feedback and the UCI who have the same priority and are multiplexed on the same PUCCH are received.

In an implementation, the association UCI includes at least one of an A-CSI feedback, a P-CSI feedback, an SP-CSI feedback, an association HARP-ACK feedback, a scheduling request (SR) or a channel sounding reference signal (SRS).

In an implementation, indicating the resource for sending the CSI feedback through the time domain resource indication in the association DCI includes the following.

A time domain resource for sending the CSI feedback is indicated through the time domain resource indication in the association DCI.

In an implementation, the time domain resource indication in the association DCI is used for indicating an offset between a time domain resource unit where the association DCI is located and a time domain resource unit where the CSI feedback is located.

The time domain resource unit includes at least one of: a frame, a subframe, a slot, a subslot or an OFDM symbol.

In an implementation, indicating the resource for sending the CSI feedback through the PUCCH resource indication in the association DCI includes the following.

An index of a PUCCH resource carrying the CSI feedback is indicated through the PUCCH resource indication in the association DCI.

In an implementation, the method further includes the following.

In a case where the association DCI is the last DCI corresponding to the association HARQ-ACK feedback, the PUCCH resource indication further indicates a PUCCH resource carrying the association HARQ-ACK feedback.

In an implementation, indicating the resource for sending the CSI feedback through the preset time domain offset includes the following.

A time domain resource for sending the CSI feedback is indicated through the preset time domain offset, where the preset time domain offset is predefined by a system, is configured by the base station to the terminal through RRC signaling or is indicated in the association DCI.

In an implementation, the preset time domain offset is used for indicating an offset between a time domain resource unit for sending the CSI feedback and a time domain resource unit for sending the association HARQ-ACK feedback.

In an implementation, indicating the resource for sending the CSI feedback through the preset frequency domain offset includes the following.

A frequency domain resource for sending the CSI feedback is indicated through the preset frequency domain offset, where the preset frequency domain offset is predefined by the system, is configured to the terminal through RRC signaling, or is indicated in the association DCI.

In an implementation, the preset frequency domain offset is used for indicating an offset between a starting frequency domain resource unit for sending the CSI feedback and a starting frequency domain resource unit for sending the association HARQ-ACK feedback, where the frequency domain resource unit is a PRB, a BWP or an RBG.

In an implementation, indicating the resource for sending the CSI feedback through the preset PUCCH resource indication offset includes the following.

A PUCCH resource carrying the CSI feedback is indicated through the preset PUCCH resource indication offset, where the preset PUCCH resource indication offset is predefined by the system, is configured to the terminal through RRC signaling or is indicated in the association DCI.

In an implementation, the preset PUCCH resource indication preset is used for indicating an offset between an index of the PUCCH resource carrying the CSI feedback and an index of a PUCCH resource carrying the association HARQ-ACK feedback.

In an implementation, indicating the resource relevant configuration for sending the CSI feedback includes the following.

A payload of the CSI feedback is indicated through a first configuration value, where the first configuration value is predefined by the system or is configured to the terminal through RRC signaling, and includes the number of CSI reports included in the CSI feedback or the number of bits included in the CSI feedback.

In an implementation, indicating the resource relevant configuration for sending the CSI feedback includes the following.

It is indicated that the terminal configures the CSI feedback to include multiple CSI reports, where a payload of each CSI report is the same, the number of the multiple CSI reports is predefined by the system or is configured to the terminal through RRC signaling, and the payload of the each CSI report is predefined by the system or is configured to the terminal through RRC signaling.

In an implementation, the sending situation of the association HARQ-ACK feedback includes sending the association HARQ-ACK feedback and cancelling the sending of the association HARQ-ACK feedback.

In an implementation, the method further includes the following.

Cancelling the sending of the CSI feedback is correspondingly indicated through cancelling the sending of the association HARQ-ACK feedback.

The embodiment provides a terminal, and the terminal includes a memory, a processor, a program stored on the memory and executable on the processor and a data bus for enabling connection communication between the processor and the memory, where the program, when executed by the processor, implements the channel state information feedback method provided in the embodiments.

The embodiment provides a base station, and the base station includes a memory, a processor, a program stored on the memory and executable on the processor and a data bus for enabling connection communication between the processor and the memory, where the program, when executed by the processor, implements the channel state information feedback method provided in the embodiments.

The embodiment provides a storage medium configured for computer-readable storage. The storage medium stores one or more programs executable by one or more processors to implement the channel state information feedback method provided in the embodiments.

It is to be understood by those of ordinary skill in the art that some or all steps of the preceding method and function modules/units in the preceding system or device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor, such as a central processing unit, a digital signal processor or a microprocessor, may be implemented as hardware, or may be implemented as integrated circuits, such as application-specific integrated circuits. Such software may be distributed on computer-readable media. The computer-readable media may include computer storage media (or non-transitory media) and communication media (or transitory media). As known to those of ordinary skill in the art, the term computer storage media includes volatile and non-volatile as well as removable and non-removable media implemented in any method or technology for storing information (such as computer-readable instructions, data structures, program modules or other data). The computer storage media include, but are not limited to, a random-access memory (RAM), a read-only memory (ROM), an electrically erasable programmable read-only memory (EEPROM), a flash memory or other memory technologies, a compact disc read-only memory (CD-ROM), a digital versatile disc (DVD) or other optical disc storage, a magnetic cassette, a magnetic tape, disk storage or other magnetic storage apparatuses, or any other medium used for storing desired information and accessible by a computer. Moreover, as known to those of ordinary skill in the art, the communication media generally include computer-readable instructions, data structures, program modules or other data in carriers or in modulated data signals transported in other transport mechanisms and may include any information delivery medium.

## Claims

1. A channel state information (CSI) feedback method, comprising:
determining a resource for sending CSI feedback;
preparing the CSI feedback; and
sending the CSI feedback on the resource.

2. The method according to claim 1, wherein determining the resource for sending the CSI feedback comprises:
determining the resource for sending the CSI feedback according to at least one of:
a priority of the CSI feedback, a time domain resource indication in association downlink control information (DCI), a physical uplink control channel (PUCCH) resource indication in association DCI, a preset time domain offset, a preset frequency domain offset, a preset PUCCH resource indication offset, a priority of association uplink control information (UCI) or a sending situation of an association hybrid automatic repeat request acknowledgment (HARQ-ACK) feedback.

3. The method according to claim 2, wherein determining the resource for sending the CSI feedback according to the priority of the CSI feedback comprises:
determining the priority of the CSI feedback according to a priority indicator field indication comprised in the received association DCI or a priority of the association HARQ-ACK feedback.

4. The method according to claim 3, wherein the association DCI comprises at least one of:
DCI for triggering the CSI feedback;
DCI for scheduling a transmission channel triggering the CSI feedback, wherein the transmission channel comprises a physical downlink shared channel (PDSCH) or a physical uplink shared channel (PUSCH); or
a last DCI for scheduling a transmission channel corresponding to the association HARQ-ACK feedback.

5. The method according to claim 3, wherein the association HARQ-ACK feedback comprises at least one of:
an HARQ-ACK feedback of a transmission channel scheduled by the association DCI;
an HARQ-ACK codebook comprising an HARQ-ACK feedback of a transmission channel scheduled by the association DCI;
an HARQ-ACK feedback having a same priority as the CSI feedback; or
an HARQ-ACK codebook comprising an HARQ-ACK feedback having a same priority as the CSI feedback.

6. The method according to claim 3, wherein determining the priority of the CSI feedback according to a priority indicator field comprised in the received association DCI comprises:
in a case where the priority indicator field indication in the association DCI is a high priority, the priority of the CSI feedback being a high priority; in a case where the priority indicator field indication in the association DCI is a low priority, the priority of the CSI feedback being a low priority.

7. The method according to claim 3, wherein determining the priority of the CSI feedback according to the priority of the association HARQ-ACK feedback comprises:
in a case where the priority of the association HARQ-ACK feedback is a high priority, the priority of the CSI feedback being a high priority; in a case where the priority of the association HARQ-ACK feedback is a low priority, the priority of the CSI feedback being a low priority.

8. The method according to any one of claims 3 to 7, wherein sending the CSI feedback on the resource comprises:
in a case where multiple CSI feedbacks need to be sent to a base station, multiplexing CSI feedbacks having a same priority on a same PUCCH for sending.

9. The method according to claim 8, wherein the CSI feedback comprises at least one of an aperiodic CSI (A-CSI) feedback, a periodic CSI (P-CSI) feedback or a semi-persistent CSI (SP-CSI) feedback.

10. The method according to any one of claims 3 to 7, wherein sending the CSI feedback on the resource comprises:
in a case where a priority of a CSI feedback needing to be sent to a base station is same as the priority of the association UCI, multiplexing the CSI feedback and the association UCI who have the same priority on a same PUCCH for sending.

11. The method according to claim 10, wherein the association UCI comprises at least one of an A-CSI feedback, a P-CSI feedback, an SP-CSI feedback, an association HARP-ACK feedback, a scheduling request (SR) or a channel sounding reference signal (SRS).

12. The method according to claim 2, wherein determining the resource for sending the CSI feedback according to the time domain resource indication in the association DCI comprises:
determining a time domain resource for sending the CSI feedback according to the time domain resource indication in the association DCI.

13. The method according to claim 12, wherein
the time domain resource indication in the association DCI is used for indicating an offset between a time domain resource unit where the association DCI is located and a time domain resource unit where the CSI feedback is located, wherein
the time domain resource unit comprises at least one of: a frame, a subframe, a slot, a subslot or an orthogonal frequency-division multiplexing (OFDM) symbol.

14. The method according to claim 2, wherein determining the resource for sending the CSI feedback according to the PUCCH resource indication in the association DCI comprises:
determining an index of a PUCCH resource carrying the CSI feedback according to the PUCCH resource indication in the association DCI.

15. The method according to claim 14, wherein
in a case where the association DCI is a last DCI of an HARQ-ACK codebook where the association HARQ-ACK feedback is located, the PUCCH resource indication further indicates a PUCCH resource carrying the association HARQ-ACK feedback.

16. The method according to claim 2, wherein determining the resource for sending the CSI feedback according to the preset time domain offset comprises:
determining a time domain resource for sending the CSI feedback according to the preset time domain offset, wherein the preset time domain offset is predefined by a system, is configured by a base station through radio resource control (RRC) signaling, or is indicated in the association DCI.

17. The method according to claim 16, wherein
the preset time domain offset is used for indicating an offset between a time domain resource unit for sending the CSI feedback and a time domain resource unit for sending the association HARQ-ACK feedback.

18. The method according to claim 2, wherein determining the resource for sending the CSI feedback according to the preset frequency domain offset comprises:
determining a frequency domain resource for sending the CSI feedback according to the preset frequency domain offset, wherein the preset frequency domain offset is predefined by a system, is configured by a base station through RRC signaling, or is indicated in the association DCI.

19. The method according to claim 18, wherein
the preset frequency domain offset is used for indicating an offset between a starting frequency domain resource unit for sending the CSI feedback and a starting frequency domain resource unit for sending the association HARQ-ACK feedback, wherein the frequency domain resource unit is a physical resource block (PRB), a bandwidth part (BWP) or a resource block group (RBG).

20. The method according to claim 2, wherein determining the resource for sending the CSI feedback according to the preset PUCCH resource indication offset comprises:
determining a PUCCH resource carrying the CSI feedback according to the preset PUCCH resource indication offset, wherein the preset PUCCH resource indication offset is predefined by a system, is configured by a base station through RRC signaling, or is indicated in the association DCI.

21. The method according to claim 20, wherein
the preset PUCCH resource indication preset is used for indicating an offset between an index of the PUCCH resource carrying the CSI feedback and an index of a PUCCH resource carrying the association HARQ-ACK feedback.

22. The method according to claim 1, wherein preparing the CSI feedback comprises:
determining a payload of the CSI feedback according to a first configuration value, wherein the first configuration value is predefined by a system or is configured by a base station to a terminal through RRC signaling, and is used for indicating a number of CSI reports comprised in the CSI feedback or a number of bits comprised in the CSI feedback.

23. The method according to claim 22, further comprising:
in a case where a CSI feedback payload prepared according to a received CSI trigger is less than the payload determined according to the first configuration value, supplementing a specific position of the CSI feedback with a plurality of padding bits;
in a case where a CSI feedback payload prepared according to a received CSI trigger is greater than the payload determined according to the first configuration value, dropping at least one CSI report to enable the CSI feedback payload to be equal to the payload determined according to the first configuration value.

24. The method according to claim 23, where in the case where the CSI feedback payload prepared according to the received CSI trigger is greater than the payload determined according to the first configuration value, dropping the at least one CSI report to enable the CSI feedback payload to be equal to the payload determined according to the first configuration value comprises:
dropping the at least one CSI report according to a time order in which CSI reports are triggered; or
dropping the at least one CSI report according to a priority order of CSI reports.

25. The method according to claim 24, wherein dropping the at least one CSI report according to the time order in which the CSI reports are triggered comprises:
dropping a CSI report triggered earlier.

26. The method according to claim 24, wherein dropping the at least one CSI report according to the priority order of the CSI reports comprises:
dropping a CSI report having a lower priority.

27. The method according to claim 1, wherein preparing the CSI feedback comprises:
configuring the CSI feedback to comprise a plurality of CSI reports, wherein a payload of each CSI report of the plurality of CSI reports is same, a number of the plurality of CSI reports is predefined by a system or is configured by a base station through RRC signaling, and the payload of the each CSI report is predefined by the system or is configured by the base station through RRC signaling.

28. The method according to claim 2, wherein the sending situation of the association HARQ-ACK feedback comprises sending the association HARQ-ACK feedback and cancelling the sending of the association HARQ-ACK feedback.

29. The method according to claim 28, further comprising:
in response to cancelling the sending of the association HARQ-ACK feedback, correspondingly cancelling the sending of the CSI feedback.

30. The method according to claim 2, wherein
in a case where a PUCCH resource carrying the CSI feedback at least partially overlaps a PUCCH resource carrying other UCI in a time domain, multiplexing the CSI feedback and the other UCI on a same PUCCH resource.

31. The method according to claim 30, wherein in the case where the PUCCH resource carrying the CSI feedback at least partially overlaps the PUCCH resource carrying the other UCI in the time domain, multiplexing the CSI feedback and the other UCI on the same PUCCH resource comprises:
in a case where a multiplexed UCI payload exceeds a carrying capability of the PUCCH resource for multiplexing, dropping part of UCI according to a priority rule.

32. The method according to claim 31, wherein in the case where the multiplexed UCI payload exceeds the carrying capability of the PUCCH resource for multiplexing, dropping the part of the UCI according to the priority rule comprises:
the priority rule being that a priority of an HARQ-ACK feedback, a priority of an A-CSI feedback, a priority of an SP-CSI feedback and a priority of a P-CSI feedback progressively decrease; and
dropping UCI having a low priority.

33. A channel state information (CSI) feedback method, comprising:
triggering a CSI feedback;
indicating resource relevant configuration for sending the CSI feedback; and
receiving the corresponding CSI feedback.

34. The method according to claim 33, wherein indicating the resource relevant configuration for sending the CSI feedback comprises:
indicating a resource for sending the CSI feedback through at least one of:
a priority of the CSI feedback, a time domain resource indication in association downlink control information (DCI), a physical uplink control channel (PUCCH) resource indication in association DCI, a preset time domain offset, a preset frequency domain offset, a preset PUCCH resource indication offset, a priority of association uplink control information (UCI) or a sending situation of an association hybrid automatic repeat request acknowledgment (HARQ-ACK) feedback.

35. The method according to claim 34, wherein indicating the resource for sending the CSI feedback through the priority of the CSI feedback comprises:
indicating the priority of the CSI feedback through a priority indicator field indication comprised in the sent association DCI or a priority of the association HARQ-ACK feedback.

36. The method according to claim 35, wherein the association DCI comprises at least one of:
DCI for triggering the CSI feedback;
DCI for scheduling a transmission channel triggering the CSI feedback, wherein the transmission channel comprises a physical downlink shared channel (PDSCH) or a physical uplink shared channel (PUSCH); or
a last DCI for scheduling a transmission channel corresponding to the association HARQ-ACK feedback.

37. The method according to claim 35, wherein the association HARQ-ACK feedback comprises at least one of:
an HARQ-ACK feedback of a transmission channel scheduled by the association DCI;
an HARQ-ACK codebook comprising an HARQ-ACK feedback of a transmission channel scheduled by the association DCI;
an HARQ-ACK feedback having a same priority as the CSI feedback; or
an HARQ-ACK codebook comprising an HARQ-ACK feedback having a same priority as the CSI feedback.

38. The method according to claim 35, wherein indicating the priority of the CSI feedback through a priority indicator field comprised in the association DCI comprises:
in a case where the priority indicator field indication in the association DCI is a high priority, indicating that the priority of the CSI feedback is a high priority; in a case where the priority indicator field indication in the association DCI is a low priority, indicating that the priority of the CSI feedback is a low priority.

39. The method according to claim 35, wherein indicating the priority of the CSI feedback through the priority of the association HARQ-ACK feedback comprises:
in a case where it is indicated that the priority of the association HARQ-ACK feedback is a high priority, indicating that the priority of the CSI feedback is a high priority; in a case where it is indicated that the priority of the association HARQ-ACK feedback is a low priority, indicating that the priority of the CSI feedback is a low priority.

40. The method according to any one of claims 35 to 39, wherein receiving the corresponding CSI feedback comprises:
in a case where multiple CSI feedbacks need to be received, receiving CSI feedbacks having a same priority which are multiplexed on a same PUCCH.

41. The method according to claim 40, wherein the CSI feedback comprises at least one of an aperiodic CSI (A-CSI) feedback, a periodic CSI (P-CSI) feedback or a semi-persistent CSI (SP-CSI) feedback.

42. The method according to any one of claims 35 to 39, wherein receiving the corresponding CSI feedback comprises:
in a case where a priority of a CSI feedback needing to be received is the same as the priority of the association UCI, receiving the CSI feedback and the association UCI who have the same priority and are multiplexed on a same PUCCH.

43. The method according to claim 42, wherein the association UCI comprises at least one of an A-CSI feedback, a P-CSI feedback, an SP-CSI feedback, an association HARP-ACK feedback, a scheduling request (SR) or a channel sounding reference signal (SRS).

44. The method according to claim 34, wherein indicating the resource for sending the CSI feedback through the time domain resource indication in the association DCI comprises:
indicating a time domain resource for sending the CSI feedback through the time domain resource indication in the association DCI.

45. The method according to claim 44, wherein
the time domain resource indication in the association DCI is used for indicating an offset between a time domain resource unit where the association DCI is located and a time domain resource unit where the CSI feedback is located, wherein
the time domain resource unit comprises at least one of: a frame, a subframe, a slot, a subslot or an orthogonal frequency-division multiplexing (OFDM) symbol.

46. The method according to claim 34, wherein indicating the resource for sending the CSI feedback through the PUCCH resource indication in the association DCI comprises:
indicating an index of a PUCCH resource carrying the CSI feedback through the PUCCH resource indication in the association DCI.

47. The method according to claim 46, wherein
in a case where the association DCI is a last DCI of an HARQ-ACK codebook where the association HARQ-ACK feedback is located, the PUCCH resource indication further indicates a PUCCH resource carrying the association HARQ-ACK feedback.

48. The method according to claim 34, wherein indicating the resource for sending the CSI feedback through the preset time domain offset comprises:
indicating a time domain resource for sending the CSI feedback through the preset time domain offset, wherein the preset time domain offset is predefined by a system, is configured by a base station to a terminal through radio resource control (RRC) signaling, or is indicated in the association DCI.

49. The method according to claim 48, wherein
the preset time domain offset is used for indicating an offset between a time domain resource unit for sending the CSI feedback and a time domain resource unit for sending the association HARQ-ACK feedback.

50. The method according to claim 34, wherein indicating the resource for sending the CSI feedback through the preset frequency domain offset comprises:
indicating a frequency domain resource for sending the CSI feedback through the preset frequency domain offset, wherein the preset frequency domain offset is predefined by a system, is configured to a terminal through RRC signaling, or is indicated in the association DCI.

51. The method according to claim 50, wherein
the preset frequency domain offset is used for indicating an offset between a starting frequency domain resource unit for sending the CSI feedback and a starting frequency domain resource unit for sending the association HARQ-ACK feedback, wherein the frequency domain resource unit is a physical resource block (PRB), a bandwidth part (BWP) or a resource block group (RBG).

52. The method according to claim 34, wherein indicating the resource for sending the CSI feedback through the preset PUCCH resource indication offset comprises:
indicating a PUCCH resource carrying the CSI feedback through the preset PUCCH resource indication offset, wherein the preset PUCCH resource indication offset is predefined by a system, is configured to a terminal through RRC signaling or is indicated in the association DCI.

53. The method according to claim 52, wherein
the preset PUCCH resource indication preset is used for indicating an offset between an index of the PUCCH resource carrying the CSI feedback and an index of a PUCCH resource carrying the association HARQ-ACK feedback.

54. The method according to claim 33, wherein indicating the resource relevant configuration for sending the CSI feedback comprises:
indicating a payload of the CSI feedback through a first configuration value, wherein the first configuration value is predefined by a system or is configured to a terminal through RRC signaling, and comprises a number of CSI reports comprised in the CSI feedback or a number of bits comprised in the CSI feedback.

55. The method according to claim 33, wherein indicating the resource relevant configuration for sending the CSI feedback comprises:
indicating that a terminal configures the CSI feedback to comprise a plurality of CSI reports, wherein a payload of each CSI report of the plurality of CSI reports is same, a number of the plurality of CSI reports is predefined by a system or is configured to the terminal through RRC signaling, and the payload of the each CSI report is predefined by the system or is configured to the terminal through RRC signaling.

56. The method according to claim 34, wherein the sending situation of the association HARQ-ACK feedback comprises sending the association HARQ-ACK feedback and cancelling the sending of the association HARQ-ACK feedback.

57. The method according to claim 56, further comprising:
correspondingly indicating cancelling the sending of the CSI feedback through cancelling the sending of the association HARQ-ACK feedback.

58. A terminal comprising a memory, a processor, a program stored on the memory and executable on the processor and a data bus for enabling connection communication between the processor and the memory, wherein the program, when executed by the processor, implements the channel state information (CSI) feedback method according to any one of claims 1 to 32.

59. A base station comprising a memory, a processor, a program stored on the memory and executable on the processor and a data bus for enabling connection communication between the processor and the memory, wherein the program, when executed by the processor, implements the channel state information (CSI) feedback method according to any one of claims 33 to 57.

60. A storage medium, configured for computer-readable storage, storing at least one program executable by at least one processor to implement the channel state information (CSI) feedback method according to any one of claims 1 to 32 or the CSI feedback method according to any one of claims 33 to 57.
